# EUROPÄISCHE PATENTSCHRIFT

(11) **EP 1 065 022 B1**
(45) Veröffentlichungstag und Bekanntmachung des Hinweises auf die Patenterteilung: **26.04.2006**
(21) Anmeldenummer: 00113856.9
(22) Anmeldetag: 30.06.2000
(51) Int. Cl.: B23K 11/00, B23K 11/02, B23K 37/04, F04D 29/34, F04D 25/06, F01D 5/30

(54) **Verfahren und Vorrichtung zum Befestigen von Luftleitflügeln**
Method and device for fixing air blades
Procédé et dispositif de fixation de pales

(30) Priorität: 30.06.1999 DE 19929871
(43) Veröffentlichungstag der Anmeldung: 03.01.2001
(73) Patentinhaber: Stadtmüller, Uwe, 74706 Osterburken (DE)
(72) Erfinder: Stadtmüller, Uwe, 74706 Osterburken (DE)
(74) Vertreter: Schuster, Gregor

(56) Entgegenhaltungen:
- DE-A- 2 626 539
- FR-A- 2 226 241
- GB-A- 1 210 141
- US-A- 2 174 801
- US-A- 2 426 746
- US-A- 3 056 369

## Beschreibung

Die Erfindung geht aus von einem Verfahren und einer Vorrichtung zur Durchführung des Verfahrens, zum Befestigen von Luftleitflügeln odgl. mittels Widerstandsschweißen nach der Gattung des Anspruchs 1 und des Anspruchs 3, siehe, z.B., US-A-2 426 746.

Es ist bekannt, Luftleitflügel an einem Rotor zu befestigen, indem die Luftleitflügel auf Stoß auf die Mantelfläche aufgesetzt werden, um dann mit dem Rotor verschweißt zu werden. Die Mantelfläche des Rotors ist insbesondere zylindrisch, d.h. in der einen Richtung gewölbt, in der anderen linear, wobei jeder Luftleitflügel schräg zur Drehrichtung befestigt wird und in sich meistens auch noch leicht gewölbt ist, um eine Verbiegungssteifigkeit zu erhalten. Hierdurch muß die auf der Mantelfläche des Rotors aufgesetzte Stirnseite gekrümmt sein, wobei die Krümmungslinie Schnittlinie zweier Wölbungen ist, nämlich derjenigen des durch das Schrägaufsetzen gegebenen Mantelfläche des Rotors sowie derjenigen der Flügelwölbung.

Gemäß einem in einer älteren Patentanmeldung beschriebenen Verfahren sind in der Mantelfläche des Rotors schräg angeordnete Nuten vorgesehen, in welche die Stirnseiten der Luftleitflügel eingesetzt werden, um danach mit dem Rotor verschweißt zu werden. Vorzugsweise erfolgt das Schweißen durch Laserschweißen. Da bei diesem Verfahren die Verschweißung zwischen den Stirnkanten der Schrägnut und der Wandfläche des Luftleitflügels erfolgt, sind gewisse Toleranzen zwischen der Stirnseite des Luftleitflügels und des gegenüberliegenden Bodens der Schrägnut zulässig. Durch das Laserschweißen allerdings entstehen Temperaturspannungen, die zu entsprechenden Verwerfungen der miteinander zu verbindenden Teile führen kann. Außerdem ist der Aufwand zur Erstellung der Schrägnut verhältnismäßig groß.

Aus der DE 2626539 A ist bekannt, aus Stahlblech gestanzte Luftleitflügel zur Verbesserung der motorischen Eigenschaften überwiegend axial schräg über das Blechpaket eines Außenläufermotors mittels Widerstandsschweißverfahren, gemäß dem in der DE 1628349 C beschriebenen Verfahren zu schweißen, wobei allerdings die einander gegenüberliegenden Flächen, nämlich die Stirnseite des Luftleitflügels und die Mantelfläche des Rotors, einen Forraschluss bilden müssen. Außerdem muss der Flügel mit seiner Stirnseite fest auf die Mantelfläche des Rotors gepresst werden, um den für das Schweißen erforderlichen Widerstand in entsprechend niedrigen Grenzen zu halten. Um die erforderliche präzise Zusammcnfubrung von Luftleitflügel und Rotor zu erhalten, werden beide Teile von Spanneinrichtungen aufgenommen und aneinander gefahren, wonach der Schweißstrom angelegt und die Verschweißung stattfindet. Danach wird der Rotor mit dem mit ihm verbundenen Luftleitflügel nach Öffnen der Spannvorrichtung derselben zurückgefahren, entsprechend verdreht und nach Einspannen eines neuerlichen Luftleitflügels in die Spannvorrichtung wieder herangefahren, um dann mit diesem nächsten Luftleitflügel verschweißt zu werden. Da für das Zusammenpressen der zu verschweißenden Fläche erhebliche Kräfte erforderlich sind, müssen die Spanneinrichtungen für Rotor und Luftleitflügel entsprechend aufwendig gestaltet sein, insbesondere auch, die Vorrichtung zum Aneinanderfahren betreffend. Nicht zuletzt führt die Verschweißung auf einer Seite des Rotors zu Spannungen und Verformungen desselben, insbesondere, wenn es sich um üblicherweise ein Blechpaket handelt.

Aus der US-A-2174801 ist eine Vorrichtung bekannt, mittels der aus Blechstreifen geformte, an ihrem Fußende rechtwinklig umgebogene Luftleitschaufeln gleichzeitig auf die gegenüberliegenden Fläche einer ebenen, kreisförmigen Rotorscheibe gehalten werden, um so, beispielsweise durch Verschweißen, einen Radiallüfter herzustellen. Bei dieser Vorrichtung werden die Luftleitschaufeln in Richtung der Rotationsachse der Rotorscheibe mittels frei schwimmender Haltevorrichtung an die selbe herangeführt, so dass die am Fußende rechtwinklig umgebogenen Bleche die gegenüberliegenden Flächen der Rotorscheibe berühren, um anschließend von zwei gegenüberliegenden Schweißelektroden zusammengepresst und gleichzeitig punktverschweißt zu werden. Eine solche Vorrichtung eignet sich nicht für die Herstellung von Axialgebläsen, bei denen die Luftleitschaufeln senkrecht zur Richtung der Rototionsachse an einem dreidimensionalen, insbesondere zylinderförmigen Rotor herangeführt und mit diesem verschweißt werden müssen. Darüber hinaus bewirkt die Haltevorrichtung keinen Anpressdruck der Luftleitschaufeln auf die Rotorscheibe, weswegen die in der US-A-2174801 beschriebene Vorrichtung nicht zur Befestigung von Luftleitflügel an einen Rotor mittels eines Widerstandsschweißverfahren geeignet ist.

Aus der US-A-3056369 ist eine Vorrichtung zur Herstellung mehrteiliger Rotornaben für Axialgebläse bekannt. Mit dieser Vorrichtung werden die zu verbindenden Teile, Rotornabe und im Umfang beabstandete Aufnahmen zum Einspannen jeweils eines Schafts einer Luftleitschaufel, mittels einer ringförmigen Schablone, an welcher im Durchmesser dem Schaftdurchmesser einer Leitschaufel entsprechende Dome nach innen reichen und die Aufnahmen für die Leitschaufeln fixieren, relativ zueinander positioniert. Rotornabe und Aufnahmen werden anschließend reihum manuell verschweißt. Das Verfahren weist jedoch den Nachteil auf, dass es sich nicht zur Herstellung von Axialgebläsen auf Außenläuferrotoren von Elektromotoren mittels Widerstandsschweißverfahren eignet, da hierfür die zu verbindenden Teile zusätzlich zur gegenseitigen Positionierung gegeneinander gepresst werden müssen, um eine zuverlässige Schweißverbindung zu gewährleisten, insbesondere bei einem automatischen Fertigungsprozess.

### Die Erfindung und ihre Vorteile

Das erfindungsgemäße Verfahren mit den Merkmalen des Anspruchs 1 und die erfindungsgemäße Vorrichtung mit den Merkmalen des Anspruchs 3 haben demgegenüber den Vorteil, dass durch das Fixieren des Rotors und das Heranfahren der einzelnen Luftleitflügel von einander abgewandten Seiten sowie das Anpressen der Luftleitflügel an den Rotor von einander abgewandten Seiten eine einseitige Belastung vermieden wird und zu einem Ausgleich der an dem Rotor angreifenden Kräfte führt, so dass die für das Schweißen erforderliche Anpresskräfte sich gegeneinander aufheben. Besonders die den Rotor haltende und fixierende Spannvorrichtung, braucht kaum mehr Widerstandskräfte aufzunehmen oder aufzubringen und kann deshalb verhältnismäßig leicht ausgebildet sein, was besonders dann von Vorteil ist, wenn die Fertigung automatisiert ist und der Rotor einfach und schnell ausgetauscht werden muss. Dadurch, dass die Berührungslinie zur Rotorachse doppelt gekrümmt verläuft, sind auch die bei einseitigem Anpressen gegebenen Druckkräfte ungleichmäßig, was sich beim erfindungsgemäßen Verfahren und der erfindungsgemäßen Vorrichtung aufhebt. Es verbleibt zwar noch ein geringer Verdrehschub beim Zusammenpressen, der jedoch ohne erhebliche zusätzliche Mittel aufgefangen werden kann. Nicht zuletzt besteht der Vorteil darin, dass mindestens zwei schweißbare Einstellungen je Fertigungstakt erreichbar ist, wobei bei unregelmäßiger Anzahl der Luftleitflügel jeweils einer zwei auf der abgewandten Seite gegenüberliegen. Durch die radial gesehen gleichmäßige Aufteilung der Presskräfte und die Vermeidung einzelner lokaler Temperaturspitzen durch gleichzeitiges Schweißen an mehreren Stellen am Umfang des Rotors, besteht auch eine geringere Gefahr des Verzugs des Rotors während des Schweißvorgangs aufgrund der wenn auch kurzfristig gegebenen Temperaturen. Zudem erlaubt das erfindungsgemäße Verfahren durch das stumpfe Aneinaderfahren der zu verbindenden Teile das Aufschweißen aerodynamisch profilierter Luftleitschaufeln auf zylinderförmige Rotoren, beispielsweise den Außenläufer eines Elektromotors.

Alle pro Rotor vorgesehenen Luftleitflügel werden vor dem Schweißvorgang an den Rotor geführt. Dieses kann in einem Takt erfolgen, wobei auch das Anpressen unmittelbar mit dem Anfahren verbunden wird. Nach einer weiteren vorteilhaften Ausgestaltung der Erfindung werden alle an einem Rotor zu befestigenden Luftleitflügel gleichzeitig in einem Schweißvorgang mit dem Rotor verbunden. Hierdurch wird vor allem Zeit eingespart und es wird nicht zuletzt eine gleichmäßige Temperaturaufteilung rund um den Rotor erzielt.

Nach einer die Vorrichtung nach Anspruch 3 betreffenden Ausgestaltung der Erfindung, ist eine Schweißvorrichtung mit Schieber- und Spanneinrichtungen versehen, mittels der profilierten Luftleitschaufeln gehalten und auf einen in seiner Einspannlage fixieren Rotor gepresst werden, um gleichzeitig mittels Widerstandsschweißen auf den Rotor befestigt zu werden. Das Heranfahren der Luftleitschaufeln erfolgt dabei senkrecht zur Drehachse des Rotors, welcher beispielsweise der Außenläufer eines Elektromotors sein kann. Natürlich kann die Erfindung auch für andere entsprechende Gegenstände angewendet werden, wie beispielsweise über eine Achse angetriebene Ventilatoren udgl.. Das Heranfahren und Anpressen der Rotoren erfolgt dabei mindestens gleichzeitig von zwei Seiten des Rotors aus, so dass die auf den Rotor wirkenden resultierenden Kräfte sich gegenseitig aufheben.

Weitere Vorteile und vorteilhafte Ausgestaltungen der Erfindung sind der nachfolgenden Beschreibung, der Zeichnung und den Ansprüchen entnehmbar.

### Zeichnung

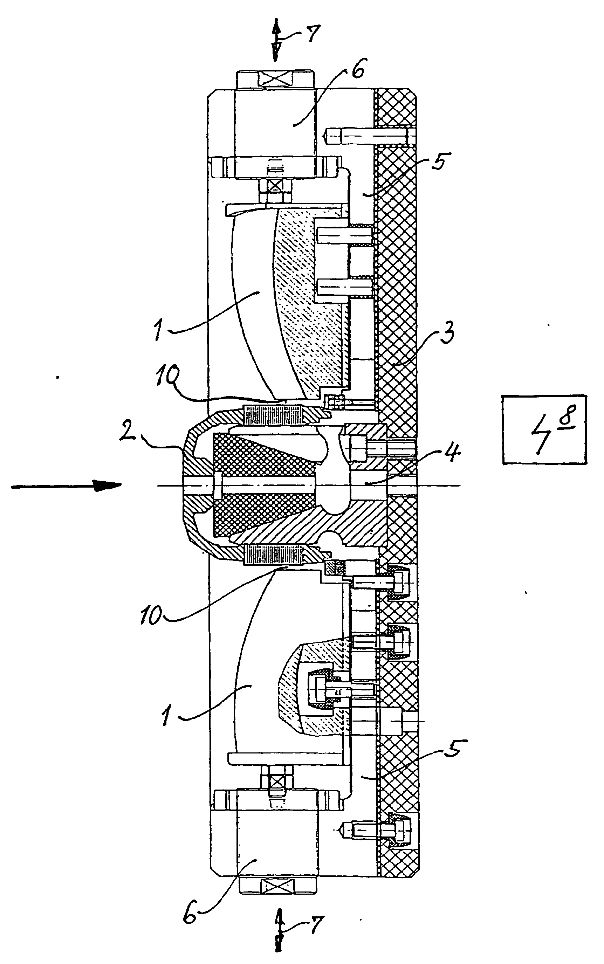

Ein Ausführungsbeispiel des Gegenstandes der Erfindung ist in der Zeichnung stark vereinfacht dargestellt und im folgenden näher beschrieben. Es zeigen
- Figur 1: einen Längsschnitt durch eine Vorrichtung, einschließlich Werkstück und

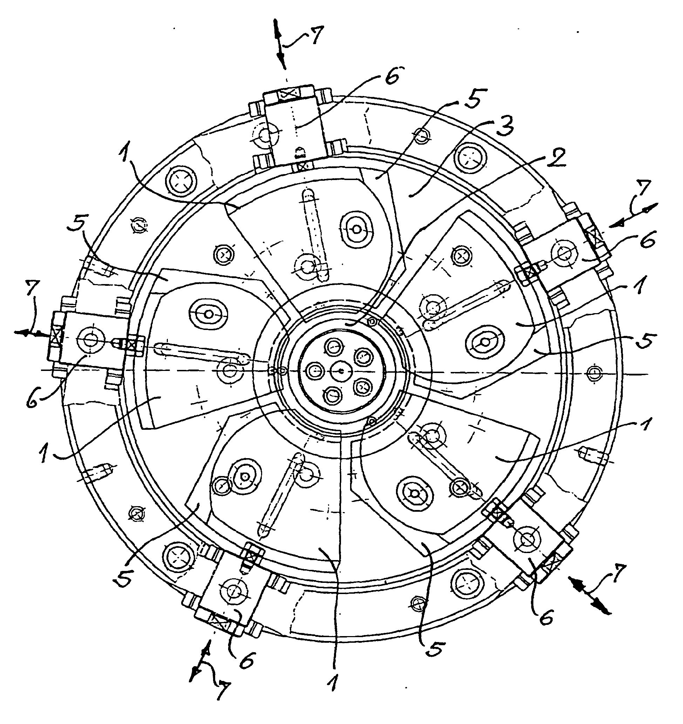

- Figur 2: eine Draufsicht entsprechend dem Pfeil in Figur 1 in verkleinertem Maßstab.

### Beschreibung des Ausführungsbeispiels

In der Zeichnung ist eine Vorrichtung gezeigt, über die erfindungsgemäß Luftleitflügel 1 an einen Rotor 2 eines Außenläufermotors angeschweißt werden. Auf einer Grundplatte 3 der Vorrichtung ist ein Zapfen 4 angeordnet, auf welchen der Rotor 2 von oben gesteckt wird und dadurch in seiner axialen und radialen Lage fixiert ist. Auf der Grundplatte 3 sind außerdem Schiebereinrichtungen 5 angeordnet, auf denen Spanneinrichtungen 6 für die Luftleitflügel 1 entsprechend den Doppelpfeilen 7 verschiebbar sind. Über ein Kondensatorentladungsgerät 8 wird über Kabel 9 einerseits den Luftleitflügeln 1, anderseits dem Rotor 2, entsprechend der Kondensatorentladung kurzfristig Hochspannung zugeführt, wodurch an den Berührungsstellen 10, an denen die entsprechenden Stirnseiten der Luftleitflügel 1 auf die Mantelfläche des Rotors 2 gepreßt werden, eine Verschweißung stattfindet. Aufgrund des Kondensatorschweißverfahrens können mehrere solche Verbindungen gleichzeitig hergestellt werden, wonach dann die Spanneinrichtungen 6 die Luftleitflügel 1 freigeben, um mit neuerlichen Luftleitflügeln und Rotoren beladen zu werden, nachdem der Rotor 2 mit dem bereits angeschweißten Luftleitflügeln 1 entfernt wurde.

## Patentansprüche

1. Verfahren zum Befestigen von Luftleitflügeln (1) o. dgl. mit Umfangsabstand an einem Rotor (2) eines Außenläufers eines Elektromotors o. dgl. mittels Widerstandsschweißen mit folgenden Verfahrensschritten:
- Einsetzen des zylinderförmigen Rotors (2) in eine Spannvorrichtung (4),
- der Rotor (2) wird vor Aneinanderfahren von Luftleitflügel (1) und Rotor (2) fix positioniert,
- Einsetzen der profilierten Luftleitflügel in jeweils eine Spanneinrichtung mit Spannbacken (6),
- Heranfahren der Luftleitflügel (1) senkrecht zur Rotordrehachse an den Rotor (2) mit stumpfer Auflage (10) der anzuschweißenden, gewölbten und/oder profilierten Fußabschnitte des Luftleitflügels (1) auf der Mantelfläche des Rotors (2),
- Zusammenpressen von Rotor (2) und Luftleitflügel (1),
- Anlegen des Schweißstroms und Widerstandsschweißen der Luftleitflügel (1) auf den Rotor (2),
- Lösen der Spanneinrichtungen (6),
**gekennzeichnet durch** folgende Verfahrensschritte
- alle an dem Rotor (2) zu befestigenden Luftleitflügel (1) werden in vorbestimmter Position auf einander abgewandten Seiten in jeweils einer Spanneinrichtung (6) fixiert und vor dem Schweißvorgang an den Rotor(2) herangefahren,
- so dass sich beim Zusammenpressen die für das Schweißen erforderlichen, in Richtung auf die Rotordrehachse wirkenden Zusammenpresskräfte gegenseitig aufheben.

2. Verfahren nach Anspruch 1 oder 2,
**dadurch gekennzeichnet,**
**dass** alle Luftleitflügel (1) gleichzeitig oder mit geringer Verzögerung untereinander mit dem Rotor (2) verschweißt werden.

3. Vorrichtung insbesondere zur Durchführung des Verfahrens nach einem der Ansprüche 1 und 2, zum Befestigen von Luftleitflügeln(1) o. dgl. mit Umfangsabstand an einem zylinderförmigen Rotor (2) eines Außenläufers eines Elektromotors o. dgl. mittels Widerstandsschweißen,
- wobei eine mit Schieber- und Spanneinrichtungen (4, 5, 6, 7) versehende Schweißmaschine vorhanden ist,
- wobei eine Spannvorrichtung (4) für eine waagerecht fixierte Einspannlage des Rotors (2) vorgesehen ist,
**dadurch gekennzeichnet,**
- **dass** mindestens zwei und entsprechend der Anzahl der am Rotor (2) zu befestigenden Luftleitflügel (1) Schiebereinrichtungen (5) mit Spannbacken (6) auf einander abgewandten Seiten der Spannvorrichtung (4) des Rotors (2) angeordnet, senkrecht zur Rotorachse gegen diese verfahrbar sind,
- **dass** eine Spannbacke (6) o. dgl. auf jeder Schiebereinrichtung (5) zur Aufnahme eines profilierten Luftleitflügels (1) angeordnet ist,
- **dass** eine an jeder Schiebeeinrichtung (5) angreifende Einrichtung zur Erzeugung eines Anlegedruckes zwischen gewölbtem und/oder profiliertem Fußabschnitt des eingespannten Luftleitflügels (1)und der zylinderförmigen Mantelfläche des Rotors (2) auf einander abgewandten Seiten derselben vorgesehen ist, wobei während der Benutzung der Vorrichtung alle Schiebereinrichtungen (5) mit den Spannbacken (6) und den von diesen aufgenommenen Luftleitflügel (1) an den Rotor (2) herangefahren und mit jeder Einrichtung unter Druck auf den Rotor gepresst werden,
- so dass sich die aus dem Anlegedruck der Luftleitflügel (1) resultierende und für das Widerstandsschweißen erforderlichen Anpresskräfte auf die Spannvorrichtung (4) für den Rotor (2) gegeneinander aufheben.

## Claims

1. A method for fixing air blades (1) or the like with circumferential clearance on a rotor (2) of an external rotor of an electric motor or the like, namely by means of resistance welding, comprising the following steps:
- inserting the cylindrical rotor (2) into a clamping device (4),
- rigidly positioning the rotor (2) before the air blades (1) and the rotor (2) are moved toward one another,
- respectively inserting the profiled air blades into a clamping device with clamping jaws (6),
- moving the air blades (1) against the rotor (2) perpendicular to the rotational axis of the rotor such that the curved and/or profiled base sections of the air blades (1) to be welded on are bluntly supported (10) on the outside surface of the rotor (2),
- pressing together the rotor (2) and the air blades (1),
- applying the welding current and resistance-welding the air blades (1) to the rotor (2), and
- loosening the clamping devices (6),
**characterized in** the following steps
- all air blades (1) to be fixed on the rotor (2) are respectively clamped in a clamping device (6) in predetermined positions on opposite sides and moved against the rotor (2) before the welding process
- such that the pressing forces required for the welding process which act in the direction of the rotational axis of the rotor while the respective components are pressed together cancel out one another.

2. The method according to Claim 1 or 2,
**characterized in that**
all air blades (1) are welded to the rotor (2) simultaneously or successively with a slight delay.

3. A device, in particular, for carrying out the method according to Claim 1 or 2 for fixing air blades (1) or the like with circumferential clearance on a cylindrical rotor (2) of an external rotor of an electric motor or the like, namely by means of resistance welding,
- wherein a welding machine with sliding and clamping devices (4, 5, 6, 7) is provided, and
- wherein a clamping device (4) for a horizontally fixed clamping position of the rotor (2) is provided,
**characterized in that**
- at least two sliding devices (5) with clamping jaws (6) and a number of sliding devices with clamping jaws that corresponds to the number of air blades (1) to be fixed on the rotor (2) are arranged on opposite sides of the clamping device (4) of the rotor (2) such that they can the perpendicularly displaced relative to the rotor axis, **in that**
- one clamping jaw (6) or the like is arranged on each sliding device (5) in order to accommodate a profiled air blade (1), **in that**
- a device that engages on each sliding device (5) and serves for generating a contact pressure between the curved and/or profiled base section of the clamped air blade (1) and the cylindrical outside surface of the rotor (2) is provided on opposite sides thereof, wherein all sliding devices (5) with the clamping jaws (6) and the air blades (1) accommodated therein are moved against the rotor (2) while the device is in use and pressed on the rotor under pressure with each device
- such that the pressing forces on the clamping device (4) for the rotor (2) which result from the contact pressure of the air blades (1) and are required for the resistance welding cancel out one another.

## Revendications

1. Procédé de fixation de pales (1) ou similaires avec un écart périphérique sur un rotor (2) d'un rotor externe d'un moteur électrique ou similaire par soudage à résistance par les étapes opératoires suivantes :
- insertion du rotor de forme cylindrique (2) dans un dispositif de serrage (4),
- le rotor (2) est positionné fixement avant le rapprochement de la pale (1) et du rotor (2),
- insertion des pales profilées dans respectivement un dispositif de serrage à mâchoires de serrage (6),
- approche des pales (1) perpendiculairement à l'axe de rotation du rotor vers le rotor (2) avec appui tronconique (10) des sections de base à souder, bombées et/ou profilées de la pale (1) sur la surface de chemise du rotor (2),
- compression du rotor (2) et de la pale (1),
- application du courant de soudage et soudage à résistance des pales (1) sur le rotor (2),
- desserrage des dispositifs de serrage (6),
**caractérisé par** les étapes opératoires suivantes :
- toutes les pales (1) à fixer au rotor (2) sont fixées dans une position prédéfinie sur des côtés détournés les uns des autres dans respectivement un dispositif de serrage (6) et approchées du rotor (2) avant l'opération de soudage,
- de sorte que, lors de la compression, les forces de compression nécessaires au soudage agissant en direction de l'axe de rotation du rotor s'annulent réciproquement.

2. Procédé selon la revendication 1 ou 2,
**caractérisé en ce que**
toutes les pales (1) sont soudées au rotor (2) simultanément ou avec un faible décalage entre elles.

3. Dispositif notamment pour la réalisation du procédé selon l'une quelconque des revendications 1 et 2 pour la fixation de pales (1) ou similaires avec un écart périphérique sur un rotor de forme cylindrique (2) d'un rotor externe d'un moteur électrique ou similaire par soudage à résistance,
- étant prévue une machine à souder à équiper de dispositifs de tiroirs et de serrage (4, 5, 6, 7),
- étant prévu un dispositif de serrage (4) pour une position de serrage du rotor fixée à l'horizontale (2),
**caractérisé en ce que**
- au moins deux dispositifs coulissants (5) à mâchoires de serrage (6), en fonction du nombre de pales (1) à fixer au rotor (2), disposés sur des côtés détournés les uns des autres du dispositif de serrage (4) du rotor (2) sont déplaçables perpendiculairement à l'axe du rotor vers celui-ci,
- une mâchoire de serrage (6) ou similaire est disposée sur chaque dispositif coulissant (5) pour recevoir une pale profilée (1),
- un dispositif s'engrenant sur chaque dispositif coulissant (5) et servant à générer une pression d'application entre la section de base bombée et/ou profilée de la pale enserrée (1) et la surface de chemise de forme cylindrique du rotor (2) est prévue sur des côtés détournés les uns des autres de ceux-ci, tandis que, pendant l'utilisation du dispositif, tous les dispositifs coulissants (5) sont approchés avec les mâchoires de serrage (6) et les pales (1) maintenues par celles-ci vers le rotor (2) et comprimés sous pression avec chaque dispositif contre le rotor ,
- de sorte que les forces de compression résultant de la pression d'application des pales (1) et nécessaires pour le soudage à résistance exercées sur le dispositif de serrage (4) du rotor (2) s'annulent réciproquement.
